# EUROPEAN PATENT APPLICATION

(11) **EP 4 765 075 A1**
(43) Date of publication of application: **24.06.2026**
(21) Application number: 25783107.3
(22) Date of filing: 19.02.2025
(51) Int. Cl.: G09B 9/00, G09B 5/02, G06F 3/01, G06F 3/048, G09B 19/00, G06Q 50/20

(54) **SIMULATION SYSTEM AND METHOD FOR OPERATING SIMULATION SYSTEM**

(30) Priority: 03.04.2024 KR 20240045417
(71) Applicant: LG Energy Solution, Ltd., Seoul 07335 (KR)
(72) Inventor: YEON, Dae Hyeok, Daejeon 34122 (KR); KIM, Dae Cheon, Daejeon 34122 (KR); KIM, Eung Seo, Daejeon 34122 (KR)
(74) Representative: BCKIP Part mbB
(86) International application number: PCT/KR2025/099468
(87) International publication number: WO 2025/211931

(57) **Abstract**

According to some embodiments, a simulation system includes an interface panel configured to provide an HMI environment for receiving a manipulation input of a virtual slitting facility performing a slitting process for a battery electrode, and a main simulator configured to provide facility operation content for displaying a process of operating the virtual slitting facility based on the manipulation input to form a plurality of slitting electrodes and provide quality check content for checking an external dimension of the plurality of slitting electrodes to determine whether the slitting process is defective, and a display configured to provide an MES function for managing the slitting process.

## Description

### TECHNICAL FIELD

### Cross-reference to Related Applications

This application claims priority from Korean Patent Application No. 10-2024-0045417, filed on April 3, 2024, the disclosure of which is incorporated by reference herein.

### Technical Field

Embodiments disclosed in this document relate to a simulation system and an operating method of the simulation system.

### BACKGROUND ART

Recently, research and development on secondary batteries have been actively conducted. Here, secondary batteries are batteries that can be charged and discharged, and may be interpreted including both conventional Ni/Cd batteries, Ni/MH batteries, and recent lithium ion batteries. Among secondary batteries, lithium ion batteries may have much higher energy density than conventional Ni/Cd batteries, Ni/MH batteries, etc. and may be manufactured to be small and lightweight, and thus lithium ion batteries may have high usability as a power source for mobile devices. Recently, the scope of use of the lithium ion batteries has expanded to include a power source for electric vehicles, and the lithium ion batteries are attracting attention as a next-generation energy storage medium.

In order to manufacture a cylindrical battery cell, a slitting process of producing a plurality of pancake electrodes having a narrow width from a jumbo roll having a wide width may be performed. Since it may be difficult to train new operators when a facility is operating in an actual process line, training content that can train various elements of the slitting process in the form of a simulation may be required.

### DISCLOSURE OF THE INVENTION

### TECHNICAL PROBLEM

Embodiments disclosed in this document may provide a simulation system and an operating method of the simulation system that can train new operators in a slitting process for forming an electrode of a cylindrical battery cell.

The technical objectives of the embodiments disclosed in this document are not limited to the technical problems mentioned above, and other technical problems not mentioned can be clearly understood by those skilled in the art from the descriptions below.

### TECHNICAL SOLUTION

According to some embodiments, a simulation system includes an interface panel configured to provide an HMI environment for receiving a manipulation input of a virtual slitting facility performing a slitting process for a battery electrode, and a main simulator configured to provide facility operation content for displaying a process of operating the virtual slitting facility based on the manipulation input to form a plurality of slitting electrodes and provide quality check content for checking an external dimension of the plurality of slitting electrodes to determine whether the slitting process is defective, and a display configured to provide an MES function for managing the slitting process.

According to some embodiments, the virtual slitting facility includes an unwinder unit configured to unwind an electrode roll that is a target of the slitting process, a vision unit configured to generate visual information of the slitting process for the electrode roll, a cutting unit configured to cut the electrode roll into the plurality of slitting electrodes, and a winder unit configured to wind the plurality of slitting electrodes.

According to some embodiments, the electrode roll includes an uncoated region at left and right ends of an electrode width, and the uncoated region is cut into a left end slitting electrode and a right end slitting electrode among the plurality of slitting electrodes.

According to some embodiments, the quality check content is configured to check whether the uncoated region exists in the remaining slitting electrodes except for the left end slitting electrode and the right end slitting electrode.

According to some embodiments, the main simulator is configured to further provide condition adjustment content that adjusts a position at which the unwound electrode roll enters the cutting unit based on a width of the uncoated region present in the remaining slitting electrodes.

According to some embodiments, the manipulation input includes operating setting values of the cutting unit, and the quality check content is configured to measure an electrode width of the plurality of slitting electrodes and a winding roll side-surface step of the plurality of slitting electrodes and provide adjustment suggestion values for the operating setting values based on the electrode width and the winding roll side-surface step.

According to some embodiments, an operating method of a simulation system includes providing, through an interface panel, an HMI environment for receiving a manipulation input of a virtual slitting facility performing a slitting process for a battery electrode, providing, through a main simulator, facility operation content for displaying a process of operating the virtual slitting facility based on the manipulation input to form a plurality of slitting electrodes, providing, through the main simulator, quality check content for checking an external dimension of the plurality of slitting electrodes to determine whether the slitting process is defective, and providing, through a display, an MES function for managing the slitting process.

### ADVANTAGEOUS EFFECTS

According to the embodiments disclosed in this document, a simulation system capable of training new operators in a slitting process for forming an electrode of a cylindrical battery cell and an operation method of the simulation system can be provided.

The technical objectives of the embodiments disclosed in this document are not limited to the technical problems mentioned above, and other technical problems not mentioned can be clearly understood by those skilled in the art from the descriptions below.

### BRIEF DESCRIPTION OF THE DRAWINGS

FIG. 1 illustrates an environment in which a simulation system according to some embodiments operates.
FIG. 2 illustrates components constituting a simulation system according to some embodiments.
FIG. 3 illustrates a structure of a simulation system according to some embodiments.
FIG. 4 illustrates components constituting a virtual slitting facility according to some embodiments.
FIG. 5 illustrates detailed items of training content provided by a simulation system according to some embodiments.
FIGS. 6 and 7 illustrate a method for checking quality of a plurality of slitting electrodes generated by a slitting process according to some embodiments.
FIG. 8 illustrates steps constituting an operating method of a simulation system according to some embodiments.

### MODE FOR CARRYING OUT THE INVENTION

Hereinafter, embodiments described in this document are described with reference to the accompanying drawings. However, this is not intended to limit the disclosure of this document to a specific embodiment, but should be understood to include various modifications, equivalents, and/or alternatives of the embodiments described in this document.

Embodiments of this document and the terms used therein are not intended to limit the technical features described in this document to a specific embodiment, but should be understood to include various modifications, equivalents, or alternatives of the embodiment. In connection with the description of the drawings, similar reference numerals may be used for similar or related components. The singular form of a noun corresponding to an item may include one or more of said items, unless the context clearly indicates otherwise.

In this document, each of phrases "A or B", "at least one of A and B", "at least one of A or B", "A, B, or C", "at least one of A, B, and C", and "at least one of A, B, or C" may include any one of the items listed together in that phrase, or all possible combinations thereof. Terms such as "first", "second", "firstly", "secondly", "A", "B", "(a)", or "(b)" may be used merely to distinguish one component from another, and do not limit the components in any other respect (e.g., importance or order) unless specifically stated otherwise.

In this document, when a component (e.g., a first component) is referred to as being "connected", "coupled" or "joined" to another component (e.g., a second component), with or without the terms "functionally" or "communicatively", it means that the component can be connected to the other component directly (e.g., in a wired manner or wirelessly), or indirectly (through a third component).

The method according to various embodiments disclosed in this document may be provided by being included in a computer program product. The computer program product may be traded between a seller and a buyer as a product. The computer program product may be distributed in the form of a machine-readable storage medium (e.g., compact disc read only memory (CD-ROM)), or may be distributed online (e.g., downloaded or uploaded) through an application store or directly between two user devices. In the case of online distribution, at least a part of the computer program product may be temporarily stored or temporarily generated in a machine-readable storage medium such as a memory of a manufacturer's server, an application store's server, a relay server.

According to the embodiments disclosed in this document, each of the components (e.g., modules or programs) described above may include a single or plurality of entities, and some of the plurality of entities may be separated and placed in other components. According to the embodiments disclosed in this document, one or more of the components or operations described above may be omitted, or one or more other components or operations may be added. Alternatively or additionally, a plurality of components (e.g., modules or programs) may be integrated into a single component. In such a case, the integrated component may perform one or more functions of each of the plurality of components identically or similarly to those performed by the corresponding component among the plurality of components prior to the integration. According to the embodiments disclosed in this document, the operations performed by a module, program, or other component may be performed sequentially, in parallel, repeatedly, or heuristically, or one or more of the operations may be performed in a different order, omitted, or performed by being added with one or more other operations.

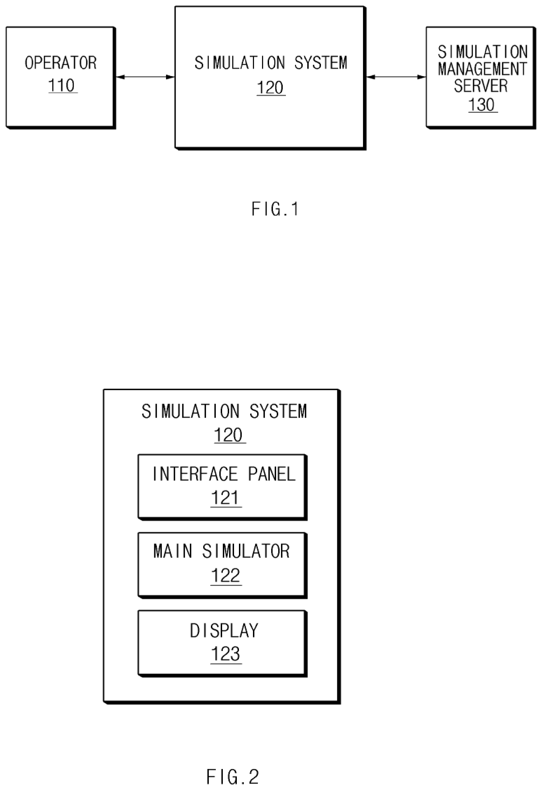

FIG. 1 may illustrate an environment in which a simulation system according to some embodiments operates.

Referring to FIG. 1, a simulation system 120 may provide simulation content to an operator 110. A simulation management server 130 may manage the content of the simulation system 120.

The simulation system 120 may provide simulation training on a manufacturing process of a cylindrical battery to the operator 110. According to the embodiment, the manufacturing process may include a slitting process for a battery electrode. The slitting process may include a process of separating a battery electrode jumbo roll having a wide width into battery electrode pancakes having a narrow width. The simulator system 120 may provide the operator 110 with a process of unwinding and cutting a jumbo roll and rewinding a plurality of slit electrodes formed through the cutting in the form of a simulation. The virtual facility executed by the simulator system 120 may be implemented in a manner such as a digital twin.

The simulation management server 130 may be configured to manage a training content provided by the simulator system 120. The simulation management server 130 may record performance results of training content and derive statistical data based on the results. The simulation management server 130 may add or change the content of the training content based on statistical data, and transmit the added or changed information to the simulator system 120. According to the embodiment, the simulation management server 130 may install content management software in the simulator system 120 and provide update information of the content management software.

FIG. 2 may illustrate components that constitute a simulation system according to some embodiments.

Referring to FIG. 2, the simulator system 120 may include an interface panel 121, a main simulator 122, and a display 123. However, the present invention is not limited thereto, and some components may be omitted from the simulation system 120, or other general-purpose components may be further included in the simulation system 120.

The interface panel 121 may provide an interface function between the operator 110 and the simulation system 120. For example, the interface panel 121 may be configured in the form of a human machine interface (HMI) panel. The interface panel 121 may receive a manipulation input for operating the simulation system 120 from the operator 110 in a manner such as a touch input, a button input, a mouse input, etc. The interface panel 121 may provide a graphical interface such as a screen that provides options for a manipulation input.

The main simulator 122 may be configured to execute a simulation of the slitting process for the battery electrode. The main simulator 122 may interact with the operator 110 to proceed with the simulation. For example, the main simulator 122 may receive a touch input or a drag input from the operator 110, proceed with the process steps of the cylindrical battery accordingly, and display the results generated at each process step to the operator 110. The main simulator 122 may include a processor and a memory for executing simulation software.

The processor of the main simulator 122 may have a structure for executing instructions for implementing the simulation. The processor may be implemented as an array of a plurality of logic gates for processing various operations or a general-purpose microprocessor, and may be composed of a single processor or a plurality of processors. For example, the processor may be implemented in the form of at least one of a microprocessor, a CPU, a GPU, and an AP.

The memory or storage of the main simulator 122 may be configured to temporarily store data or instructions, and may be configured separately or integrally with the processor. The processor may process various operations by executing instructions stored in the memory and/or storage. The memory and/or storage may store various data, instructions, software, mobile applications, computer programs, etc. For example, the memory and/or storage may be implemented as a non-volatile device such as a ROM, PROM, EPROM, EEPROM, flash memory, PRAM, MRAM, RRAM, FRAM, etc., or a volatile device such as a DRAM, SRAM, SDRAM, PRAM, etc., and may be implemented in the form of an HDD, SSD, SD, Micro-SD, etc., or a combination thereof.

The display 123 may include a display panel that provides various visual information to the operator 110. The display 123 may display detailed images of the simulation being executed in the main simulator 122. For example, when the slitting process is performed in the main simulator 122, an external image that can be recognized by the naked eye in each process can be displayed through the main simulator 122, and images of invisible areas that cannot be recognized by the naked eye can be displayed through the display 123. According to the embodiment, the display 123 may display manufacturing execution system (MES) information regarding the slitting process.

The interface panel 121 may be configured to provide an HMI environment that receives a manipulation input of the virtual slitting facility that performs the slitting process for the battery electrode. The human machine interface (HMI) environment of the interface panel 121 may implement the same method of inputting operations to the facility in a manufacturing line that actually performs the slitting process. The manipulation input of the virtual slitting facility may include a start button, a stop button, a pause button, etc. In addition, the manipulation input of the virtual slitting facility may include setting values for various parameter values of the slitting process. The parameter values of the slitting process may include a cutting knife position, cutting knife spacing, cutting speed, etc.

The main simulator 122 may be configured to provide facility operation content that displays a process of forming a plurality of slitting electrodes by operating the virtual slitting facility based on the manipulation input. When an operation start button is input through the HMI environment, the virtual slitting facility may display an operation process such as unwinding of a jumbo roll, cutting of an unwound roll, and winding of cut electrodes in the form of a 3D simulation. A point of view that displays the slitting process may be determined based on the vision unit of the virtual slitting facility.

The main simulator 122 may be configured to provide quality check content that checks whether the slitting process is defective by checking the external dimension of the plurality of slitting electrodes. The external dimension of the plurality of slitting electrodes may be determined by the cutting of the slitting process, and it may be determined by checking the external dimensions, whether the slitting process was properly performed. For example, when an electrode width of the cut slitting electrode is different from a preset numerical value, or when a protrusion occurs on the side surface of the roll due to winding of the cut slitting electrode, the slitting process may be determined as defective.

The display 123 may be configured to provide an MES function for managing the slitting process. The manufacturing execution system (MES) function may be implemented through software that monitors, controls, and manages the manufacturing process. When a plurality of slitting electrodes are manufactured through the slitting process, occurrence of defects during the manufacturing process, manufacturing performance, product identification number (LOT ID), etc. may be managed. For example, the operator 110 may refer to management data of the slitting process by executing software that provides MES functions through the display 123.

According to the embodiment, the virtual slitting facility may include an unwinder unit configured to unwind an electrode roll that is a target of a slitting process, a vision unit configured to generate visual information of the slitting process for the electrode roll, a cutting unit configured to cut the electrode roll into a plurality of slitting electrodes, and a winder unit configured to wind the plurality of slitting electrodes. The main simulator 122 may implement detailed units of the virtual slitting facility and display to the operator 110 how the detailed units operate. The vision unit may capture the process of cutting an electrode roll into a plurality of slitting electrodes, unwinding of the electrode roll, and winding of the plurality of slitting electrodes.

According to the embodiment, the electrode roll may include an uncoated region at the left and right ends of the electrode width, and the uncoated region may be cut into a left end slitting electrode and a right end slitting electrode among a plurality of slitting electrodes. The electrode roll (jumbo roll) before being cut may be coated through electrode slurry drying, and the electrode coating may not be formed at the left end and the right end of the electrode roll. For example, the electrode roll may be cut into ten slitting electrodes (pancakes), and the left end slitting electrode and the right end slitting electrode may include an uncoated region. The remaining eight slitting electrodes may not include the uncoated region.

According to the embodiment, the quality check content may be configured to check whether an uncoated region exists in the remaining slitting electrodes except for the left end slitting electrode and the right end slitting electrode. For example, the main simulator 122 may display shapes of a plurality slitting electrodes output from the cutting unit of the virtual slitting facility using the vision unit of the virtual slitting facility. The operator 110 may check the cutting results of the remaining slitting electrodes except for the left end slitting electrode and the right end slitting electrode through the quality check content, and when there is an inappropriate uncoated region, the operator 110 may report a defect in the slitting process through the interface panel 121 and/or the main simulator 122.

According to the embodiment, the main simulator 122 may be configured to further provide condition adjustment content that adjusts a position at which the unwound electrode roll enters the cutting unit based on a width of the uncoated region existing in the remaining slitting electrodes. For example, the electrode width of each of the plurality of slitting electrodes may be about 65.2 mm, and the width of the uncoated region existing at the left end and the right end of the electrode roll before being cut may be smaller than the electrode width of the slitting electrode. For example, when the uncoated region exists in the remaining slitting electrodes except for the slitting electrodes at the left end and the right end, the width of the uncoated region may be measured through the vision unit or through another separate measuring means. Since there is a mismatch in the position at which the electrode roll enters the cutting unit at least as much as the width of the uncoated region, the entry position may be adjusted in a direction opposite to the case where there is a mismatch. The adjustment size may be equal to or greater than the width of the uncoated region. The adjustment of the direction and size of the entry position may be performed by the operator 110 through the interface panel 121.

According to the embodiment, the manipulation input may include operating setting values of the cutting unit, and the quality check content may be configured to measure the electrode width of the plurality of slitting electrodes and the winding roll side-surface step of the plurality of slitting electrodes, and provide adjustment suggestion values for the operating setting values based on the electrode width and the winding roll side-surface step. For example, the operating setting values of the cutting unit may include a cutting position, a cutting interval, a cutting speed, a cutting direction, etc. Meanwhile, the defects in the slitting process may further include, in addition to the defect related to the uncoated region, a defect regarding the electrode width of the plurality of slitting electrodes and a defect regarding the winding roll side-surface step. To check these defects, the dimensions and shapes of the plurality of slitting electrodes may be inspected in the quality check content.

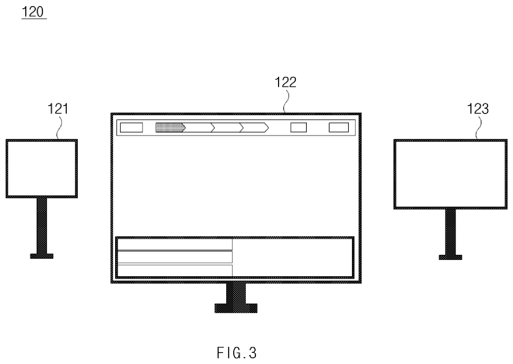

FIG. 3 may illustrate a structure of a simulation system according to some embodiments.

Referring to FIG. 3, in the simulation system 120, the interface panel 121 may be arranged on the left side of the main simulator 122, and the display 123 may be arranged on the right side of the main simulator 122. However, the resent invention is not limited thereto, and a different arrangement structure may be applied depending on the physical structure or movement line of the operator 110.

The operator 110 may generate a manipulation input for operating the virtual facilities of the main simulator 122 on the left interface panel 121, train the simulation content through touch and drag inputs to the main simulator 122 arranged on the central portion, and check a detailed image of the slitting process and/or MES information about the slitting process through the display 123 arranged on the right side.

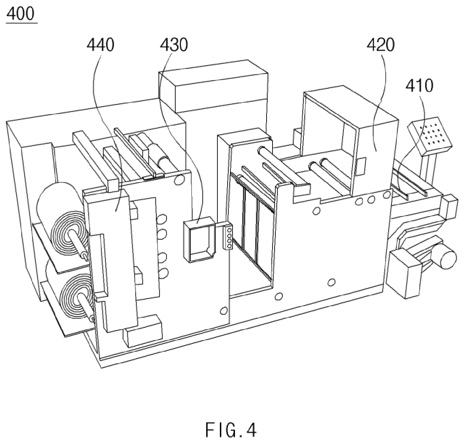

FIG. 4 illustrates components constituting a virtual slitting facility according to some embodiments.

Referring to FIG. 4, a virtual slitting facility 400 may include an unwinder unit 410, a vision unit 420, a cutting unit 430, and a winder unit 440. The virtual slitting facility 400 may be virtually generated by the main simulator 122. The specific structure of the virtual slitting facility 400 may be changed according to the design.

The unwinder unit 410 may unwind an electrode roll (jumbo roll) before the slitting process, the cutting unit 430 may cut an unwound electrode roll to generate a plurality of slitting electrodes (pancakes), and the winder unit 440 may wind the plurality of slitting electrodes. The vision unit 420 may generate images for the unwinding, cutting, and winding steps of the slitting process and display the images to the operator 110.

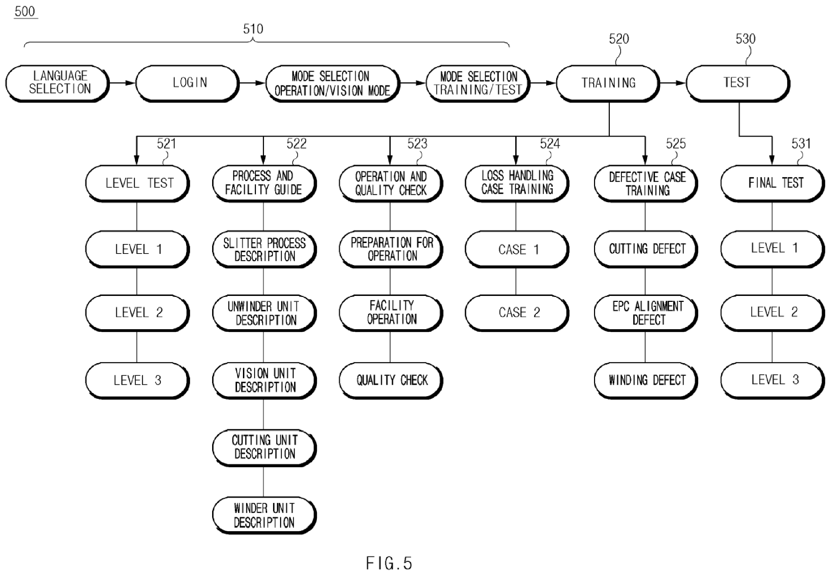

FIG. 5 illustrates detailed items of training content provided by a simulation system according to some embodiments.

Referring to FIG. 5, detailed items of training content 500 provided by the simulation system 120 may be illustrated. The training content 500 may include presets 510, training 520, and tests 530.

The presets 510 may include language selection, user login, selection of operation mode and vision mode, selection of training mode and test mode, etc. The selection tasks of the presets 510 may be performed by the operator 110 through the interface panel 121 and/or the main simulator 122.

The training 520 may include level test 521, process and facility guide 522, operation and quality check 523, loss handling case training 524, and defective case training 525. The training 520 may be provided to the operator 110 through the main simulator 122. As a result of the level test 521, the level of the operator 110 may be determined as one of 1, 2, and 3. Guide content that matches the determined level may be provided through the process and facility guide 522. The guide content may explain the detailed units of the slitter process and the virtual slitter facility.

The operation and quality check 523 may provide the operator 10 with facility operation content and quality check content. First, in an operation preparation stage, splice table inspection, airshaft pressure gauge inspection, tension adjustment, edge position control (EPC) adjustment of the slitting process, auto labeler adjustment, etc. may be performed. Second, in a facility operation stage, jumbo roll input, jumbo roll replacement, pancake cutting, LOT end, pancake extraction, pancake core input, LOT start, etc. may be performed. Third, in a quality check stage, pancake electrode width, uncoated region, pancake roll side-surface protrusion, etc. may be checked.

In loss processing case training 524 and defect case training 525, training may be performed for cutting defects regarding the pancake electrode width, EPC alignment defects regarding the uncoated region, winding defects regarding the pancake roll side-surface protrusion, etc. For these types of defects, condition adjustment content may be provided to eliminate defects by adjusting the process setting values of the virtual slitting facility. A training level of the operator 110 for the training content 500 may be determined through final test 531.

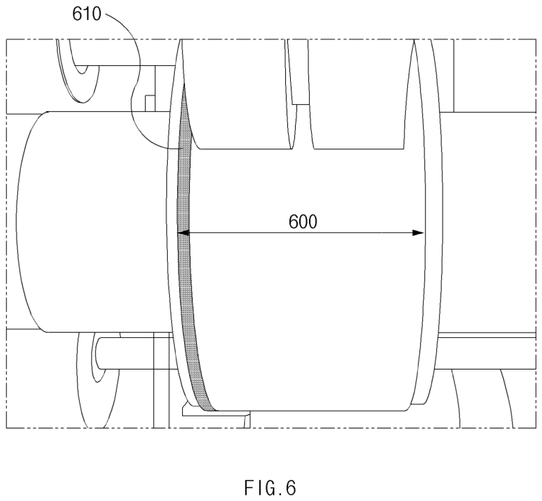

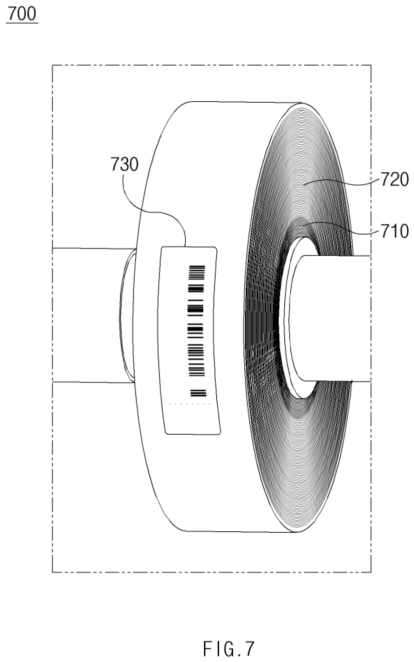

FIGS. 6 and 7 illustrate a method for checking the quality of a plurality of slitting electrodes produced by a slitting process according to some embodiments.

Referring to FIG. 6, a first slitting electrode 600 among a plurality of slitting electrodes produced by the slitting process may be illustrated. In the quality check content, an electrode width of the first slitting electrode 600 may be checked, and whether an uncoated region 610 is present in the first slitting electrode 600 may be checked.

The electrode width of the first slitting electrode 600 may be estimated through image processing, or may be directly measured through a measuring means such as a ruler. When a difference between the measured electrode width and a standard value exceeds an allowable range, facility operation setting values for the cutting unit of the virtual slitting facility may be changed through the condition adjustment content.

When the first slitting electrode 600 is not the slitting electrode at the left end or the right end, the presence of the uncoated region 610 may mean a defect in the first slitting electrode 600. A defect due to the uncoated region 610 may mean that an error in edge position control (EPC) control of the cutting unit. The EPC control of the cutting unit may be adjusted through the condition adjustment content, and through this adjustment, a position where knives of the cutting unit enter the jumbo roll may be aligned.

Referring to FIG. 7, a wound state of a second slitting electrode 700 among the plurality of slitting electrodes produced by the slitting process may be illustrated. The second slitting electrode 700 may be wound by the winder unit after being cut by the cutting unit. A barcode 730 indicating a product identification number such as LOT ID may be formed on the second slitting electrode 700.

A first winding roll side-surface step 710 and a second winding roll side-surface step 720 may be formed on a winding roll side surface of the second slitting electrode 700, and exemplary values thereof may be 1 mm and 2 mm. When step values thereof exceed the allowable range, the second slitting electrode 700 may be classified as defective.

The occurrence of the side-surface step may mean that the winding operation of the winder unit was performed improperly. To solve this problem, facility operation setting values, such as the winding speed of the winder unit and the cutting interval of the cutting unit, which determines the electrode width of a plurality of slitting electrodes, may be changed through condition adjustment content.

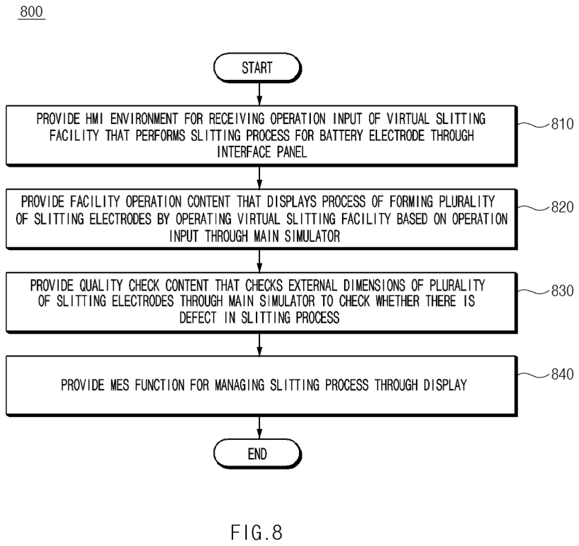

FIG. 8 illustrates steps constituting an operating method of a simulation system according to some embodiments.

Referring to FIG. 8, an operating method 800 of the simulation system may include steps 810 to 840. However, the preset invention is not limited thereto, and some steps may be omitted or other general-purpose steps may be added, and the steps of the operating method 800 of the simulation system may be executed in a different order from the illustrated order.

The operating method 800 of the simulation system may be composed of steps that are processed in time series in the simulation system 120. Therefore, even when the content is omitted below, the content described above for the simulation system 120 may be equally applied to the operating method 800 of the simulation system.

Steps 810 to 840 of the operating method 800 of the simulation system may be performed by the interface panel 121, the main simulator 122, and the display 123 of the simulation system 120.

In step 810, the simulation system 120 may perform a step of providing an HMI environment for receiving a manipulation input of a virtual slitting facility that performs a slitting process for a battery electrode through the interface panel.

In step 820, the simulation system 120 may perform a step of providing facility operation content that displays a process of forming a plurality of slitting electrodes by operating the virtual slitting facility based on manipulation input through the main simulator.

In step 830, the simulation system 120 may perform a step of providing quality check content that checks external dimensions of the plurality of slitting electrodes through the main simulator to check whether there is a defect in the slitting process.

In step 840, the simulation system 120 may perform a step of providing an MES function for managing the slitting process through the display.

According to the embodiment, the operating method 800 of the simulation system may be implemented in the form of a computer program stored in a computer-readable storage medium. That is, the computer program may include instructions for implementing the operating method 800 of the simulation system, and the instructions of the program may be stored in a computer-readable storage medium. The computer program may include a mobile application.

According to the embodiment, the computer-readable storage medium may include magnetic media such as hard disks, floppy disks, and magnetic tapes, optical media such as CD-ROMs, DVDs, magneto-optical media such as floptical disks, and hardware devices specifically configured to store and execute computer program instructions such as ROMs, RAMs, flash memory, etc. The computer program instructions may include machine language codes produced by a compiler and high-level language codes executable by a computer using an interpreter, etc.

The terms "include," "configure," or "have" described above, unless specifically stated to the contrary, mean that the corresponding component may be included, and therefore should be interpreted as further including other components rather than excluding other components. All terms including technical or scientific terms have the same meaning as commonly understood by a person skilled in the art to which the embodiments disclosed in this document belong, unless otherwise defined. Terms commonly used, such as terms defined in the dictionary, should be interpreted as being consistent with the contextual meaning of the relevant technology, and should not be interpreted in an idealized or overly formal sense unless clearly defined in this document.

The above description is merely an illustrative description of the technical idea disclosed in this document, and a person skilled in the art to which the embodiments disclosed in this document belong may make various modifications and variations thereto without departing from the essential characteristics of the embodiments disclosed in this document. Therefore, the embodiments disclosed in this document are not intended to limit the technical idea of the embodiments disclosed in this document, but rather to explain it, and the scope of the technical idea disclosed in this document is not limited by these embodiments. The scope of protection of the technical idea disclosed in this document should be interpreted by the claims below, and all technical ideas within the equivalent scope should be interpreted as being included in the scope of the rights of this document.

### [Description of symbols]

110: operator 120: simulation system
121: interface panel 122: main simulator
123: display

## Claims

1. A simulation system comprising:
an interface panel configured to provide an HMI environment for receiving a manipulation input of a virtual slitting facility performing a slitting process for a battery electrode;
a main simulator configured to provide facility operation content for displaying a process of operating the virtual slitting facility based on the manipulation input to form a plurality of slitting electrodes and provide quality check content for checking an external dimension of the plurality of slitting electrodes to determine whether the slitting process is defective; and
a display configured to provide an MES function for managing the slitting process.

2. The simulation system of claim 1, wherein the virtual slitting facility includes:
an unwinder unit configured to unwind an electrode roll that is a target of the slitting process;
a vision unit configured to generate visual information of the slitting process for the electrode roll;
a cutting unit configured to cut the electrode roll into the plurality of slitting electrodes; and
a winder unit configured to wind the plurality of slitting electrodes.

3. The simulation system of claim 2, wherein the electrode roll includes an uncoated region at left and right ends of an electrode width, and
the uncoated region is cut into a left end slitting electrode and a right end slitting electrode among the plurality of slitting electrodes.

4. The simulation system of claim 3, wherein the quality check content is configured to check whether the uncoated region exists in the remaining slitting electrodes except for the left end slitting electrode and the right end slitting electrode.

5. The simulation system of claim 4, wherein the main simulator is configured to further provide condition adjustment content that adjusts a position at which the unwound electrode roll enters the cutting unit based on a width of the uncoated region present in the remaining slitting electrodes.

6. The simulation system of claim 1, wherein the manipulation input includes operating setting values of the cutting unit, and
the quality check content is configured to measure an electrode width of the plurality of slitting electrodes and a winding roll side-surface step of the plurality of slitting electrodes and provide adjustment suggestion values for the operating setting values based on the electrode width and the winding roll side-surface step.

7. An operating method of a simulation system, comprising:
providing, through an interface panel, an HMI environment for receiving a manipulation input of a virtual slitting performing a slitting process for a battery electrode;
providing, through a main simulator, facility operation content for displaying a process of operating the virtual slitting facility based on the manipulation input to form a plurality of slitting electrodes;
providing, through the main simulator, quality check content for checking an external dimension of the plurality of slitting electrodes to determine whether the slitting process is defective; and
providing, through a display, an MES function for managing the slitting process.

8. The operating method of claim 7, wherein the virtual slitting facility includes:
an unwinder unit configured to unwind an electrode roll that is a target of the slitting process;
a vision unit configured to generate visual information of the slitting process for the electrode roll;
a cutting unit configured to cut the electrode roll into the plurality of slitting electrodes; and
a winder unit configured to wind the plurality of slitting electrodes.

9. The operating method of claim 8, wherein the electrode roll includes an uncoated region at left and right ends of an electrode width, and
the uncoated region is cut into a left end slitting electrode and a right end slitting electrode among the plurality of slitting electrodes.

10. The operating method of claim 9, wherein the quality check content is configured to check whether the uncoated region exists in the remaining slitting electrodes except for the left end slitting electrode and the right end slitting electrode.

11. The operating method of claim 10, wherein the main simulator is configured to further provide condition adjustment content that adjusts a position at which the unwound electrode roll enters the cutting unit based on a width of the uncoated region present in the remaining slitting electrodes.

12. The operating method of claim 7, wherein the manipulation input includes operating setting values of the cutting unit, and
the quality check content is configured to measure an electrode width of the plurality of slitting electrodes and a winding roll side-surface step of the plurality of slitting electrodes and provide adjustment suggestion values for the operating setting values based on the electrode width and the winding roll side-surface step.
